# EUROPEAN PATENT APPLICATION

(11) **EP 4 134 178 A1**
(43) Date of publication of application: **15.02.2023**
(21) Application number: 20936724.2
(22) Date of filing: 21.05.2020
(51) Int. Cl.: B09B 3/00, F23G 5/027, F23G 5/40, F23G 5/46, F23G 7/12

(54) **WASTE PROCESSING SYSTEM**

(71) Applicant: Nippon Light Metal Co., Ltd., Minato-ku Tokyo 105-0004 (JP)
(72) Inventor: ITO Takeshiro, Okazaki-shi, Aichi 444-3441 (JP); OKUBO Manabu, Tokyo 105-0004 (JP); WAKAI Koichi, Tokyo 105-0004 (JP); MINAMI Katsuhiro, Tokyo 105-0004 (JP); ISHIKAWA Shunya, Tokyo 105-0004 (JP); OTSUKA Shohei, Tokyo 105-0004 (JP)
(74) Representative: Kiwit, Benedikt
(86) International application number: PCT/JP2020/020154
(87) International publication number: WO 2021/234918

(57) **Abstract**

To achieve both quantity reduction and recycling of wastes, provided is a small integrated waste processing system which is economically rational even if the system is small-scaled and processes a small quantity of wastes, by cutting down costs for a waste recycling process and cutting down costs for outsourcing processing of industrial wastes by enhancing self-sufficiency of sequential processes from quantity reduction to recycling of wastes. The waste processing system includes a pyrolysis apparatus (2) that pyrolyzes a combustible waste, a melt-and-mold apparatus (3) that generates an ingot of resin and combustible gas from a synthetic-resin waste, and an oil extraction apparatus (4) that generates combustible oil and combustible gas from the ingot of resin. The melt-and-mold apparatus (3) has a melter (31) that melts the synthetic-resin waste using heat produced by the pyrolysis apparatus (2), the oil extraction apparatus (4) has a pyrolyzer (41) that pyrolyzes the ingot of resin using the heat produced by the pyrolysis apparatus (2), and at least one of the combustible gas generated at the melt-and-mold apparatus (3) and the combustible gas generated at the oil extraction apparatus (4) is supplied to the pyrolysis apparatus (2).

## Description

### TECHNICAL FIELD

The present invention relates to a waste processing system.

### BACKGROUND ART

In recent years, with the issue of garbage processing and the issue of resources becoming serious, it is encouraged not only to simply process and reduce the quantity of wastes by incineration or the like, but also to recycle and utilize the wastes. For example, in a case of wastes produced incidental to farming, the wastes may be recycled in, e.g., a biomass power station which is located at a waste dump. However, in a large-scale recycling facility such as a biomass power station, it often makes no business sense unless a large quantity of wastes are processed, and therefore it is difficult for a group-based farming community to introduce such a station. As a result, more often than not, wastes produced incidental to farming (such as crop residues and synthetic resin materials) are handled simply as industrial wastes, forcing the waste disposers to bear a great cost burden.

In some cases (see, for example, Patent Literatures 1 to 3), an incineration facility is built at the site where wastes are produced, but it is aimed to reduce the quantity of the wastes through incineration, and it is hard to say that the wastes and exhaust heat are sufficiently recycled.

### CITATION LIST

### Patent Literature

Patent Literature 1: JPH10-19223A
Patent Literature 2: JPH09-222214A
Patent Literature 3: JP03040284Y

### SUMMARY OF INVENTION

### Technical Problem

Sequential processes from quantity reduction to recycling of wastes are often based on the assumption that a large quantity is processed by a large-scale facility, and there are limited conditions under which economical rationality is satisfied. Meanwhile, in a case where a small quantity of wastes are subjected to a combination of processes from quantity reduction to recycling in a small-scale facility, fuel and power for a heat source for the recycling process may become high relative to the quantity of wastes processed, leading to high running costs.

In view of the above, the present invention aims to achieve both quantity reduction and recycling of wastes by providing a small integrated waste processing system that can be owned also by an individual and can offer economical rationality even with a small quantity of wastes to process by: cutting down costs for the recycling process by utilizing energy produced when wastes are processed and reduced in quantity and by increasing facility's working rate by being operated in or near a location where wastes are produced; and cutting down costs for outsourcing processing of industrial wastes by enhancing self-sufficiency of sequential processes from quantity reduction to recycling of wastes.

### Solution to Problem

A waste processing system of the present invention to achieve the aim includes: a pyrolysis apparatus that pyrolyzes a combustible waste; a melt-and-mold apparatus that generates an ingot of resin and combustible gas from a synthetic-resin waste; and an oil extraction apparatus that generates combustible oil and combustible gas from the ingot of resin. Here, the melt-and-mold apparatus has a melter that melts the synthetic-resin waste using heat produced by the pyrolysis apparatus. The oil extraction apparatus has a pyrolyzer that pyrolyzes the ingot of resin using the heat produced by the pyrolysis apparatus. At least one of the combustible gas generated at the melt-and-mold apparatus and the combustible gas generated at the oil extraction apparatus is supplied to the pyrolysis apparatus.

According to the above waste processing system, in which combustible oil and combustible gas can be generated from synthetic-resin wastes, synthetic-resin wastes can be recycled. Also, because heat produced by pyrolysis of combustible wastes is used for the generation of combustible oil and combustible gas, the combustible wastes can be utilized effectively. Further, because combustible gas produced at at least one of the melt-and-mold apparatus and the oil extraction apparatus is utilized for pyrolysis of synthetic-resin wastes, it is possible to enhance self-sufficiency of waste processing and thus cut down running costs required for the waste processing.

Preferably, the waste processing system of the present invention further includes: an oil tank that retains the combustible oil; and a power generation apparatus that is actuated by the combustible oil supplied from the oil tank. In this case, power generated by the power generation apparatus is preferably supplied to at least one of the pyrolysis apparatus, the melt-and-mold apparatus, and the oil extraction apparatus.

According to the above waste processing system, in which combustible oil produced from wastes is retained in the oil tank, the combustible oil can be utilized for various purposes. Further, power obtained by actuating the power generation apparatus using the combustible oil retained in the oil tank is supplied to at least one of the pyrolysis apparatus, the melt-and-mold apparatus, and the oil extraction apparatus, thereby operating these apparatuses. Thus, according to the above waste processing system, self-sufficiency can be enhanced in terms of not only heat and fuel, but also power, and thus, the running costs required for waste processing can be cut down even more.

Preferably, the waste processing system of the present invention further includes a container that houses the pyrolysis apparatus, the melt-and-mold apparatus, the oil extraction apparatus, the oil tank, and the power generation apparatus. According to the above waste processing system, in which the apparatuses are packaged into the single container, the installation of the waste processing system can be simplified. Also, the container offers protection from rain and wind, and thus, the waste processing system can be installed outdoors easily.

In the waste processing system of the present invention, the container is preferably a portable container. According to the above waste processing system, the waste processing system can be moved to a different location easily.

### ADVANTAGEOUS EFFECTS OF INVENTION

The waste processing system of the present invention can achieve both quantity reduction and recycling of wastes by providing a small integrated waste processing system that can be owned also by an individual and can offer economical rationality even with a small quantity of wastes to process by: cutting down costs for the recycling process by utilizing energy produced when wastes are processed and reduced in quantity and by increasing facility's working rate by being operated in or near a location where wastes are produced; and cutting down costs for outsourcing processing of industrial wastes by enhancing self-sufficiency of sequential processes from quantity reduction to recycling of wastes.

### BRIEF DESCRIPTION OF DRAWINGS

FIG. 1 is a system diagram showing the overall configuration of a waste processing system according to Embodiment 1 of the present invention.
FIG. 2 is a side view showing the mechanism of heat transfer in the waste processing system according to Embodiment 1 of the present invention.
FIG. 3 is a perspective view of the waste processing system according to Embodiment 1 of the present invention.
FIG. 4 is a right side view of the exterior appearance of the waste processing system according to Embodiment 1 of the present invention.
FIG. 5 is a right side view of the interior appearance of the waste processing system according to Embodiment 1 of the present invention.
FIG. 6 is a back view of the exterior appearance of the waste processing system according to Embodiment 1 of the present invention.
FIG. 7 is a back view of the interior appearance of the waste processing system according to Embodiment 1 of the present invention.
FIG. 8 is a front view of the exterior appearance of the waste processing system according to Embodiment 1 of the present invention.
FIG. 9 is a front view of the interior appearance of the waste processing system according to Embodiment 1 of the present invention.
FIG. 10 is a left side view of the interior appearance of the waste processing system according to Embodiment 1 of the present invention.
FIG. 11 is a system diagram showing the overall configuration of a waste processing system according to Embodiment 2 of the present invention.
FIG. 12 is a side view showing the mechanism of heat transfer in the waste processing system according to Embodiment 2 of the present invention.
FIG. 13 is a perspective view showing the mechanism of heat transfer in the waste processing system according to Embodiment 2 of the present invention.
FIG. 14 is a system diagram showing the overall configuration of a waste processing system according to Embodiment 3 of the present invention.
FIG. 15 is a system diagram showing the overall configuration of a waste processing system according to Embodiment 4 of the present invention.

### DESCRIPTION OF EMBODIMENTS

Embodiments of the present invention are described with reference to the drawings as needed. The present invention is not limited only to the following embodiments. Also, some or all of the constituents in the embodiments may be combined appropriately.

### [Embodiment 1]

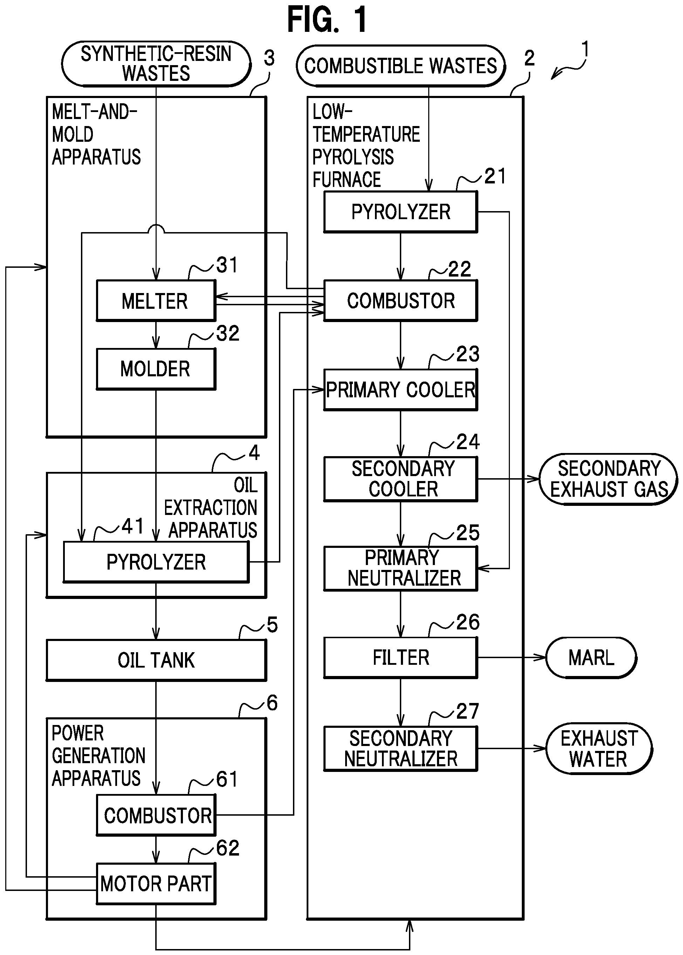

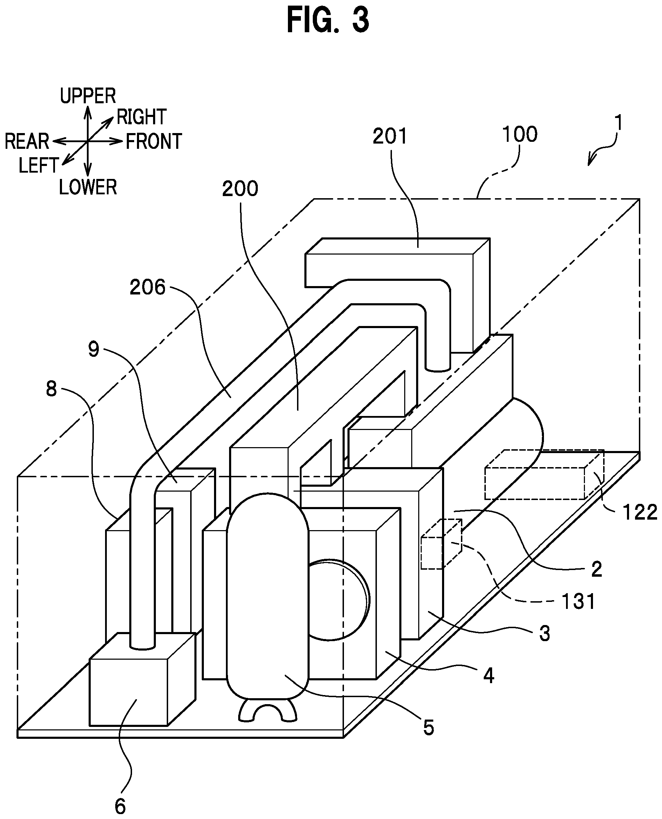

A waste processing system 1 of Embodiment 1 of the present invention is described. FIG. 1 is a system diagram showing the overall configuration of the waste processing system 1. The waste processing system 1 includes a low-temperature pyrolysis furnace (pyrolysis apparatus) 2, a melt-and-mold apparatus 3, and an oil extraction apparatus 4. Although a waste processing system with improved self-sufficiency can be achieved only with these configurations, the waste processing system 1 of the present embodiment further includes an oil tank 5 and a power generation apparatus 6. These apparatuses are housed in a container 100 (see FIG. 3).

The waste processing system 1 receives combustible wastes (i.e., garbage) and synthetic-resin wastes (i.e., plastic wastes) and discharges secondary exhaust gas, marl, and water. The waste processing system 1 reduces the combustible wastes by pyrolysis and at the same time generates power by combusting combustible oil which is comparable to light oil and which is generated from the synthetic-resin wastes using combustion heat of combustible gas produced by the pyrolysis. Combustible wastes in the present embodiment refers to a group of combustible wastes which may include naturally-derived organic wastes, synthetic-resin wastes, and other wastes. The following describes each configuration in the waste processing system 1.

The low-temperature pyrolysis furnace 2 pyrolyzes combustible wastes introduced thereto and discharges secondary exhaust gas, marl, water, and the like, and includes a pyrolyzer 21, a combustor 22, a primary cooler 23, a secondary cooler 24, a primary neutralizer 25, a filter 26, and a secondary neutralizer 27.

The pyrolyzer 21 heats combustible wastes introduced from a combustible waste introduction port 122 (see FIG. 3) to approximately 400 °C in a closed, low-oxygen environment. By being heated in a closed environment, the combustible wastes become ash while producing combustible gas. The ash, which exhibits strong alkalinity when dissolved in water, is sent to the primary neutralizer 25 to be described later and utilized for neutralization of exhaust water. The combustible gas is sent to the combustor 22.

The combustor 22 combusts the combustible gas produced at the pyrolyzer 21 and generates heat while producing primary exhaust gas. The heat is sent to the melt-and-mold apparatus 3 and the oil extraction apparatus 4 and utilized for melting and decomposing synthetic-resin compositions. The combustion temperature at the combustor 22 and the mechanism of heat transfer will be described later. The primary exhaust gas is sent to the primary cooler 23.

The primary cooler 23 cools the primary exhaust gas produced at the combustor 22 down to 200 °C or below with a radiator using rapid forced-air cooling (primary cooling). The primary cooling helps prevent emission of dioxin. The primary exhaust gas having undergone the primary cooling is sent to the secondary cooler 24.

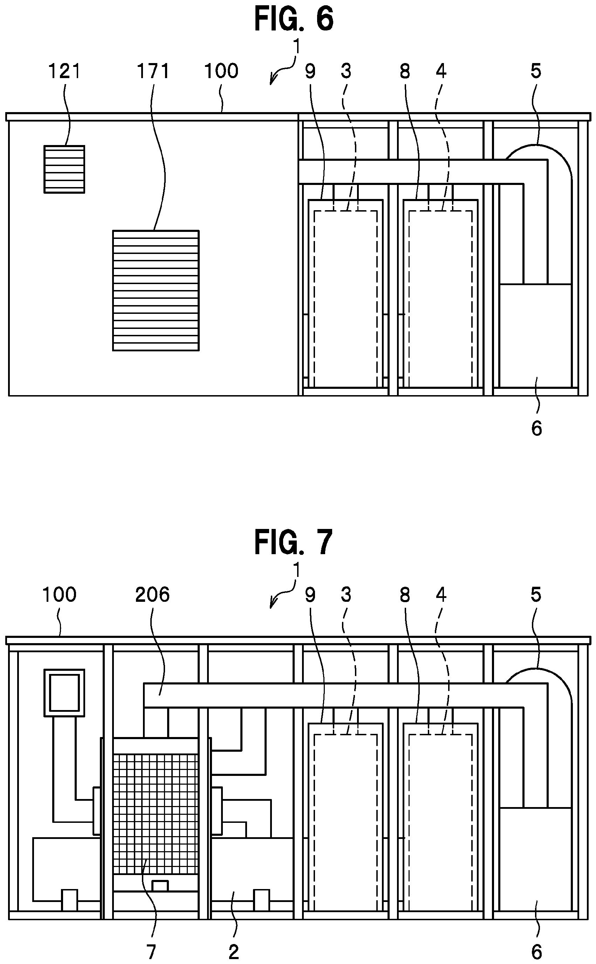

The secondary cooler 24 water-cools the primary exhaust gas cooled down to 200 °C or below at the primary cooler 23 down to approximately 50°C, thereby separating the primary exhaust gas into low-temperature secondary exhaust gas and strongly-acid condensation water. Main components of the secondary exhaust gas are carbon dioxide and the like and can therefore be released to the atmosphere. The secondary exhaust gas is discharged from a pyrolysis apparatus exhaust port 121 (see FIG. 6) via a duct 201 (see FIG. 3). The strongly-acid condensation water is sent to the primary neutralizer 25.

The primary neutralizer 25 neutralizes the strongly-acid condensation water generated at the secondary cooler 24 with the ash generated at the pyrolyzer 21 (first neutralization), thereby turning the condensation water into primary exhaust water. The primary exhaust water is sent to the filter 26.

The filter 26 filters the primary exhaust water, which is a mixture of ash and condensation water sent from the primary neutralizer 25, and thereby separates the primary exhaust water into marl and mildly-acid filtered water. The marl can be disposed of as regular garbage. The filtered water is sent to the secondary neutralizer 27.

The secondary neutralizer 27 purifies the mildly-acid filtered water by passing it through an alkaline substance such as seashells (secondary neutralization), thereby turning the filtered water to harmless exhaust water. This exhaust water can be discharged directly into sewers.

The melt-and-mold apparatus 3 is an apparatus that heats and melts synthetic-resin wastes introduced from a synthetic-resin waste introduction port 131 (see FIG. 3) and molds an ingot of resin, and includes a melter 31 and a molder 32. Synthetic-resin wastes are molded into an ingot of resin for the following reason. Specifically, if various synthetic-resin wastes with different melting points are introduced into the oil extraction apparatus 4 as they are, pyrolysis at a pyrolyzer 41 may become uneven. For this reason, various kinds of synthetic-resin wastes are melted first, agitated, and then molded into an ingot of resin, so that the melting point of each ingot of resin may be equalized. Equalizing the melting points of objects to be processed by the oil extraction apparatus 4 this way can make pyrolysis at the oil extraction apparatus 4 more efficient.

The melter 31 heats and melts synthetic-resin wastes using heat sent from the combustor 22 in the low-temperature pyrolysis furnace 2 and generates easily-moldable melted resin while producing combustible gas. The mechanism of heat transfer, the temperature at the melter 31, and the like will be described later. The combustible gas produced at the melter 31 is based on synthetic-resin wastes and can therefore contain various components, but is believed to contain a large amount of, for example, methane or the like. The combustible gas is preferably sent to the combustor 22 via a duct 200 (see FIG. 3) and utilized as a heat source.

The molder 32 forms an ingot of resin from the melted resin melted at the melter 31, the ingot having a shape suitable to be introduced into the oil extraction apparatus 4. The ingot of resin thus molded is sent to the oil extraction apparatus 4.

The oil extraction apparatus 4 is an apparatus that generates combustible oil comparable to light oil by pyrolyzing the ingot of resin generated by the melt-and-mold apparatus 3 using the heat sent from the combustor 22 of the low-temperature pyrolysis furnace 2, and includes a pyrolyzer 41. The pyrolyzer 41 is an apparatus that pyrolyzes an ingot of resin and turns the ingot into gas. This gas is separated into combustible oil and combustible gas by being processed at a cooler and the like (not shown) in the oil extraction apparatus 4. The combustible gas is preferably sent to the combustor 22 via the duct 200 (see FIG. 3) and utilized as a heat source. The utilization of the combustible gas generated by the oil extraction apparatus 4 is not essential, but at least one of the gas generated at the oil extraction apparatus 4 and the gas generated at the melter 31 is sent to the combustor 22 and utilized as a heat source.

The oil tank 5 is a container that retains the combustible oil generated at the oil extraction apparatus 4. The combustible oil can be utilized not only as a heat source for the power generation apparatus 6, but also as a drive source for various apparatuses outside the waste processing system. For instance, in a case where the waste processing system 1 is used at a farmhouse, the combustible oil can be utilized as a fuel for a boiler for a vinyl greenhouse, a cultivator, or the like.

The power generation apparatus 6 is an apparatus that generates power by combusting combustible oil retained in the oil tank 5, and includes a combustor 61 and a motor part 62. The combustor 61 is an engine fueled by the combustible oil retained in the oil tank 5, and includes, e.g., a cylinder as a combustion chamber for the combustible oil, a piston caused to reciprocate inside the cylinder by expansion gas produced when the combustible oil is combusted, and a mechanism for converting the reciprocating motion of the piston into rotational motion of a shaft. The motor part 62 is connected to the shaft driven by the combustor 61 and generates power using the rotation of the shaft. Power outputted from the power generation apparatus 6 can be used not only to operate some or all of the low-temperature pyrolysis furnace 2, the melt-and-mold apparatus 3, and the oil extraction apparatus 4, but also for various apparatuses outside the waste processing system. Exhaust gas produced at the power generation apparatus 6 is discharged to the primary cooler 23 in the low-temperature pyrolysis furnace 2 via a duct 206 (see FIG. 3).

As described above, because the waste processing system 1 includes the low-temperature pyrolysis furnace (pyrolysis apparatus) 2, the melt-and-mold apparatus 3, and the oil extraction apparatus 4, the waste processing system 1 can generate combustible oil and combustible gas from synthetic-resin wastes and thus can recycle synthetic-resin wastes. Also, because heat produced by pyrolysis of combustible wastes is utilized for the generation of combustible oil and combustible gas, combustible wastes can be utilized effectively. Further, because combustible gas produced at at least one of the melt-and-mold apparatus 3 and the oil extraction apparatus 4 is utilized for pyrolysis of synthetic-resin wastes, self-sufficiency of waste processing can be enhanced, and thus, running costs required for waste processing can be cut down.

Also, because the waste processing system 1 includes the oil tank 5 that retains combustible oil and the power generation apparatus 6 that is actuated by combustible oil supplied from the oil tank 5, the waste processing system 1 can retain, in the oil tank 5, the combustible oil produced from the wastes and utilize the combustible oil for various purposes. Further, by actuating the power generation apparatus 6 using the combustible oil retained in the oil tank 5, power can be generated, supplied to at least one of the pyrolysis apparatus 2, the melt-and-mold apparatus 3, and the oil extraction apparatus 4, and used to operate these apparatuses. Thus, according to the waste processing system 1, self-sufficiency can be enhanced in terms of not only heat and fuel but also power, and thus, the running costs required for waste processing can be cut down even more.

Further, the waste processing system 1 includes the low-temperature pyrolysis furnace 2 and thus can pyrolyze combustible wastes irrespective of their types. This is especially preferable for waste processing at a facility where the types of combustible wastes produced are unspecific, such as, for example, a shopping mall, a theme park, or an event venue.

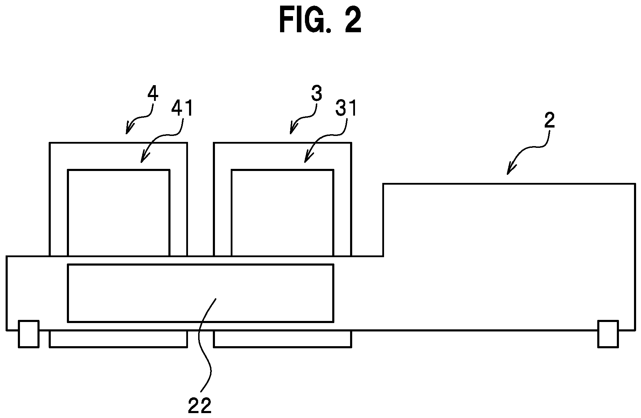

Next, the configuration of the waste processing system 1 is described in detail. FIG. 2 is a side view showing the mechanism of heat transfer in the waste processing system 1. In the waste processing system 1, heat is transferred by bringing the combustor 22 of the low-temperature pyrolysis furnace (pyrolysis apparatus) 2 into contact with the melter 31 of the melt-and-mold apparatus 3 and the pyrolyzer 41 of the oil extraction apparatus 4 with a divider wall interposed in between.

An appropriate processing temperature for the melter 31 is approximately 200 °C to 300 °C, and an appropriate processing temperature for the pyrolyzer 41 is approximately 400 °C. Meanwhile, a combustion temperature at the combustor 22 is 800 °C or above, and if the heat of the combustor 22 is conveyed directly to the melter 31 and the pyrolyzer 41, the melter 31 and the pyrolyzer 41 may become excessively hot. Thus, it is preferable to keep the melter 31 and the pyrolyzer 41 at their appropriate temperatures by employing temperature adjustment means, such as providing a heat insulator between the low-temperature pyrolysis furnace 2 and each of the melter 31 and the pyrolyzer 41.

Note that if the speed at which the melt-and-mold apparatus 3 processes synthetic-resin wastes is sufficiently high, the appropriate temperatures for the melter 31 and the pyrolyzer 41 are higher than the aforementioned temperatures. In that case, the temperature adjustment means does not need to be provided.

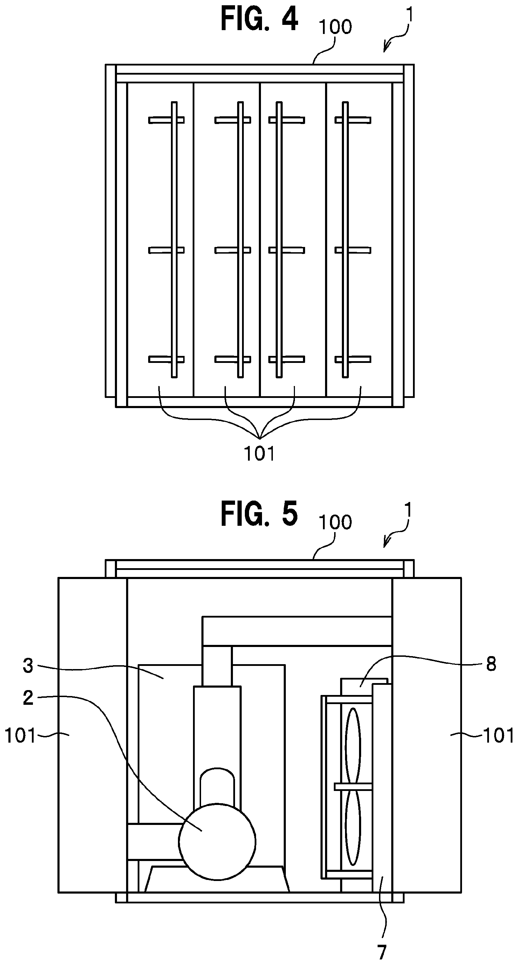

FIG. 3 is a perspective view of the waste processing system 1. As shown in FIG. 3, the low-temperature pyrolysis furnace (pyrolysis apparatus) 2, the melt-and-mold apparatus 3, the oil extraction apparatus 4, the oil tank 5, the power generation apparatus 6, a radiator 7 (see FIG. 5), a power distribution board 8, and a control board 9 that form the waste processing system 1 are housed in the container 100.

The low-temperature pyrolysis furnace 2 is situated to extend from one side (the right side in the present embodiment) to the other side of the container 100. Via the duct 201, the low-temperature pyrolysis furnace 2 communicates with the pyrolysis apparatus exhaust port 121 (see FIG. 6) at the back face of the container 100. The combustible waste introduction port 122 communicating with the low-temperature pyrolysis furnace 2 is provided at a lower part of the front face of the container on one side (the right side in the present embodiment). The melt-and-mold apparatus 3 and the oil extraction apparatus 4 are situated around the other side of the low-temperature pyrolysis furnace 2. The synthetic-resin waste introduction port 131 communicating with the melt-and-mold apparatus 3 is provided at a center portion of the front face of the container 100.

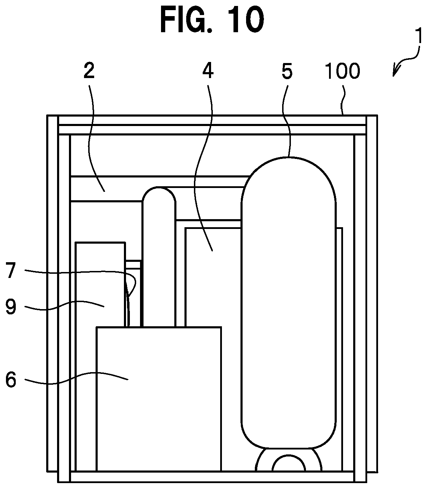

The oil extraction apparatus 4 is situated next to (in the present embodiment, on the left side of) the melt-and-mold apparatus 3. The oil tank 5 is situated next to (in the present embodiment, on the left side of) the oil extraction apparatus 4. In other words, the oil tank 5 is situated between the left sidewall of the container 100 and the oil extraction apparatus 4. The power generation apparatus 6 is, as shown in FIG. 10, situated next to (in the present embodiment, on the rear side of) the oil tank 5. The power distribution board 8 is situated next to (in the present embodiment, on the rear side of) the oil extraction apparatus 4. The control board 9 is situated next to (in the present embodiment, on the rear side of) the melt-and-mold apparatus 3.

Here, the power distribution board 8 is for controlling supply of power generated by the power generation apparatus 6 to the apparatuses and to the outside, and the control board 9 is for controlling the operations of the apparatuses.

According to such a waste processing system 1, in which the apparatuses are packaged into the single container 100, the installation of the waste processing system 1 can be simplified. Also, the container 100 offers protection from rain and wind, and thus, it is unnecessary to construct a building to house the waste processing system 1 and therefore it is easy to install the waste processing system 1 outdoors. Further, when the container 100 is a portable container, it is easy to move the waste processing system 1 to a different location. A portable container refers to a container whose wall surfaces are fixed to its bottom board and which is easily transportable by being, e.g., hoisted by a crane. A portable container may be one that can be mounted to a trailer or a train or may include moving means such as wheels.

FIG. 4 is a right side view of the exterior appearance of the waste processing system 1. The container 100 includes a door 101 on its side face (the right side face in the present embodiment) and can be opened and closed as needed. The structure of the door 101 is not limited to a particular structure as long as it is openable and closable, but may be, for example, a sliding door like in the present embodiment.

FIG. 5 is a right side view of the interior appearance of the waste processing system 1. As shown in FIG. 5, the radiator 7 is situated next to (in the present embodiment, behind) the low-temperature pyrolysis furnace 2. The radiator 7 air-cools excessive heat of the low-temperature pyrolysis furnace 2 and is situated facing a radiator exhaust port 171 (see FIG. 6) provided at a side face (in the present embodiment, the rear face) of the container 100.

FIG. 6 is a back view of the exterior appearance of the waste processing system 1. The pyrolysis apparatus exhaust port 121 and the radiator exhaust port 171 are formed at the rear face of the container 100. The pyrolysis apparatus exhaust port 121 is an exhaust port for secondary exhaust gas having undergone secondary cooling at the secondary cooler 24 in the low-temperature pyrolysis furnace 2. The low-temperature pyrolysis furnace 2 communicates with the pyrolysis apparatus exhaust port 121 via the duct 201 (see FIG. 3). The radiator exhaust port 171 is used for the radiator 7 to discharge hot air.

FIG. 7 is a back view of the interior appearance of the waste processing system 1. Thus, FIG. 7 is a diagram in which the rear wall of the container 100 is removed from FIG. 6. As shown in FIG. 7, the radiator 7 is situated on the rear side of the low-temperature pyrolysis furnace 2 and faces the radiator exhaust port 171 (see FIG. 6).

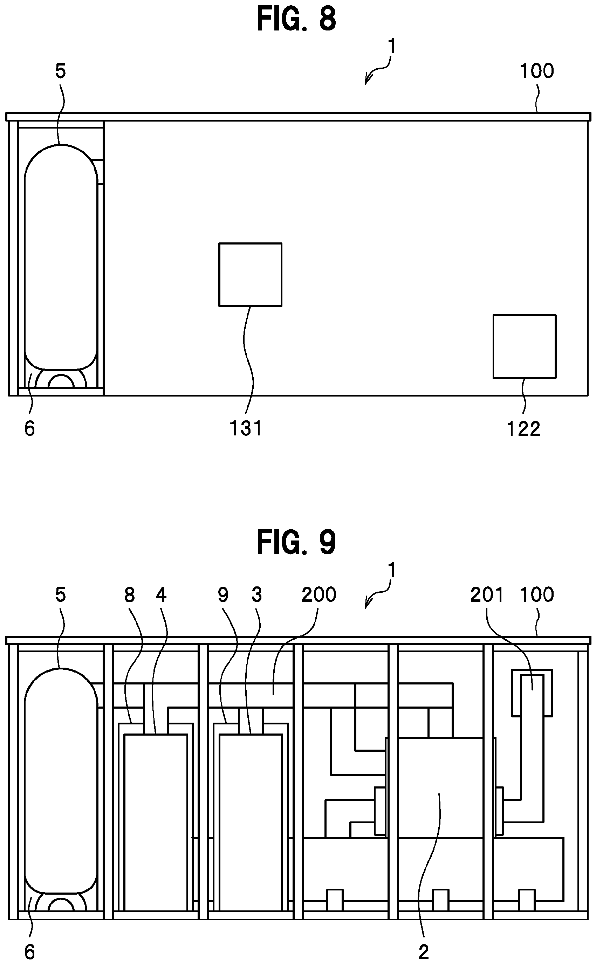

FIG. 8 is a front view of the exterior appearance of the waste processing system 1, and FIG. 9 is a front view of the interior appearance of the waste processing system 1 (a diagram in which the front wall of the container 100 is removed from FIG. 8). As shown in FIG. 8, the combustible waste introduction port 122 and the synthetic-resin waste introduction port 131 are opened in the front face of the container 100. Combustible wastes are introduced into the low-temperature pyrolysis furnace 2 (see FIG. 9) from the combustible waste introduction port 122. Synthetic-resin wastes are introduced into the melt-and-mold apparatus 3 (see FIG. 9) from the synthetic-resin waste introduction port 131.

### [Embodiment 2]

Next, a waste processing system 1A of Embodiment 2 of the present invention is described. Differences from the waste processing system 1 of Embodiment 1 will only be described in the present embodiment.

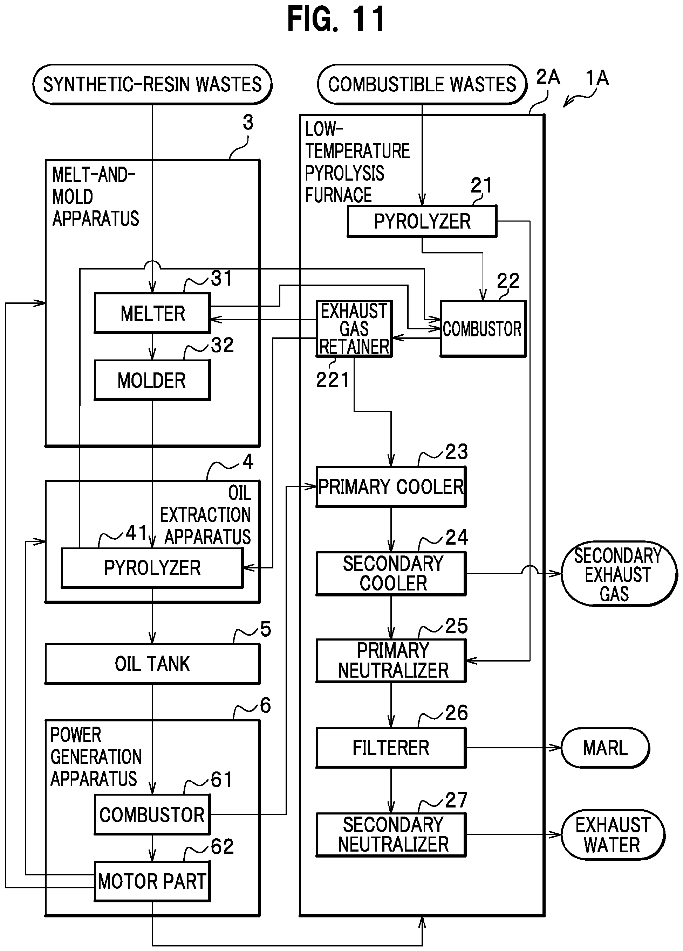

FIG. 11 is a system diagram showing the overall configuration of the waste processing system 1A. A low-temperature pyrolysis furnace 2A of the waste processing system 1A differs from Embodiment 1 in including an exhaust gas retainer 221. The exhaust gas retainer 221 is, specifically, a surge tank or the like.

The exhaust gas retainer 221 retains primary exhaust gas produced when the combustor 22 combusts combustible gas. The low-temperature pyrolysis furnace 2A transfers heat to the melt-and-mold apparatus 3 and the oil extraction apparatus 4 by refluxing primary exhaust gas retained therein.

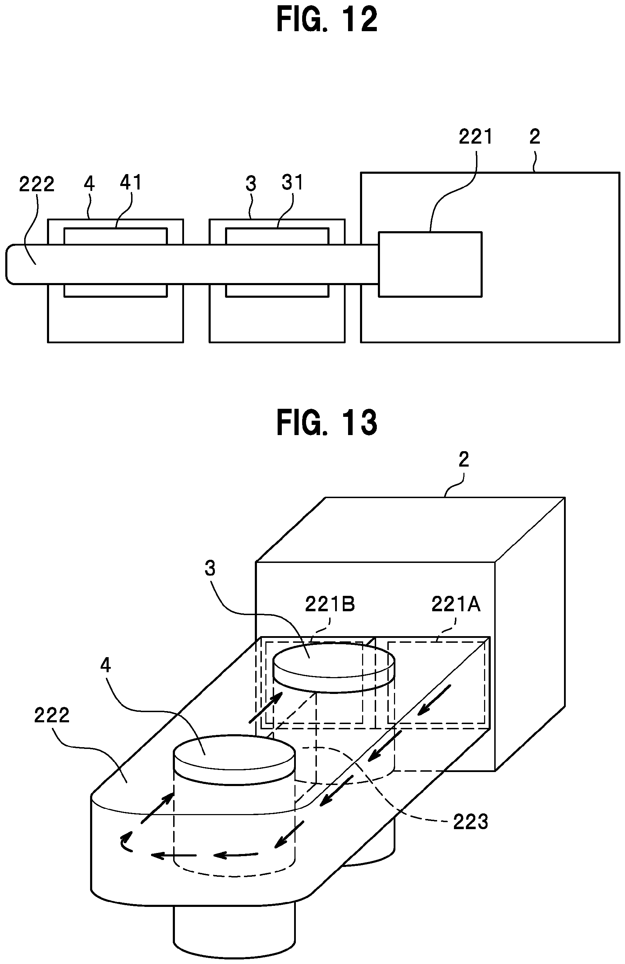

FIG. 12 is a side view showing the mechanism of heat transfer in the waste processing system 1A. FIG. 13 is a perspective view also showing the mechanism of heat transfer. The low-temperature pyrolysis furnace 2 includes the exhaust gas retainer 221, an exhaust gas reflux channel 222, and a reflux channel divider wall 223.

The exhaust gas retainer 221 retains high-temperature primary exhaust gas produced when the combustor 22 combusts combustible gas. The exhaust gas retainer 221 includes a discharge port 221A and a suck-in port 221B for the primary exhaust gas.

The exhaust gas reflux channel 222 is connected to the exhaust gas retainer 221 via the discharge port 221A and the suck-in port 221B and is formed to surround the outer walls of the melter 31 of the melt-and-mold apparatus 3 and the pyrolyzer 44 of the oil extraction apparatus 4. The exhaust gas reflux channel 222 refluxes the primary exhaust gas retained in the exhaust gas retainer 221 from the discharge port 221A to the suck-in port 221B and thereby indirectly transfers heat of the primary exhaust gas to the melter 31 and the pyrolyzer 41.

The reflux channel divider wall 223 assists in the refluxing of the primary exhaust gas by being provided in the exhaust gas reflux channel 222 between the discharge port 221A side and the suck-in port 221B side. Note that the arrow in FIG. 13 is the direction of the reflux of the primary exhaust gas.

As thus described, the waste processing system 1A of the present embodiment can facilitate control of heat transferred to the melt-and-mold apparatus 3 and the oil extraction apparatus 4 by first retaining primary exhaust gas in the exhaust gas retainer 221 and then refluxing the primary exhaust gas.

### [Embodiment 3]

Next, a waste processing system 1B of Embodiment 3 of the present invention is described. Differences from the waste processing system 1 of Embodiment 1 will only be described in the present embodiment.

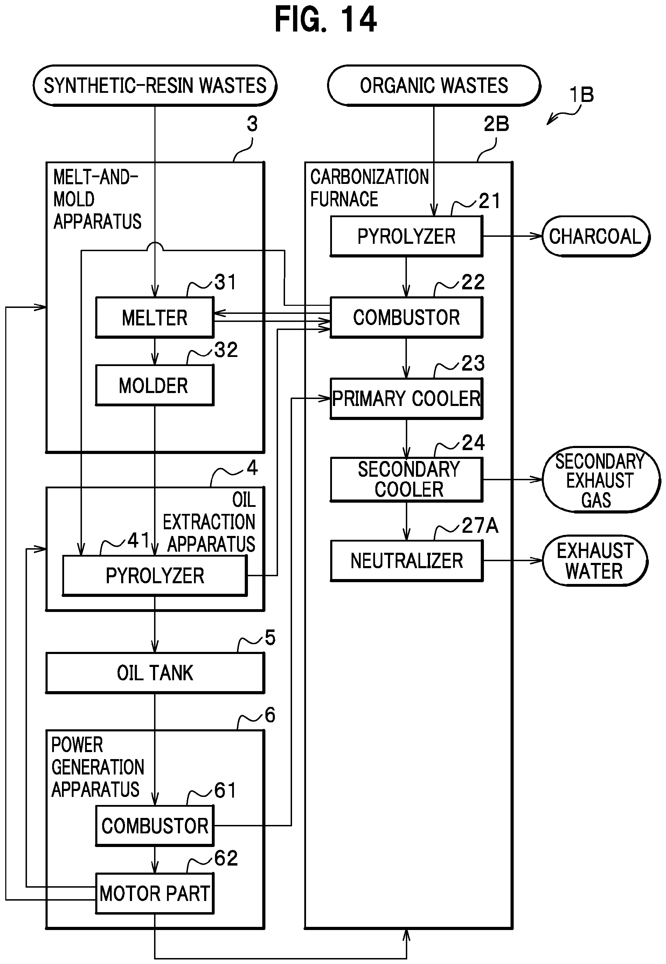

FIG. 14 is a system diagram showing the overall configuration of the waste processing system 1B. The waste processing system 1B differs from Embodiment 1 in including, as a pyrolysis apparatus, a carbonization furnace 2B in place of the low-temperature pyrolysis furnace 2. The waste processing system 1B receives naturally-derived organic wastes (organic garbage) and synthetic-resin wastes (plastic wastes), generates charcoal, and discharges secondary exhaust gas and exhaust water. Naturally-derived organic wastes here are, for example, crop residues not including synthetic-resin wastes, plant- or animal-derived garbage, and the like.

The carbonization furnace 2B is a pyrolysis apparatus intended for pyrolysis of naturally-derived organic wastes. However, the carbonization furnace 2B can tolerate receiving combustible wastes other than naturally-derived organic wastes, up to a certain amount. The carbonization furnace 2B can generate charcoal by heating naturally-derived organic wastes in a closed, low-oxygen environment.

The carbonization furnace 2B includes a neutralizer 27A in place of the following three configurations in the low-temperature pyrolysis furnace 2 of Embodiment 1: the primary neutralizer 25, the filter 26, and the secondary neutralizer 27. This is because the carbonization furnace 2B is mainly intended to process naturally-derived organic wastes, and thus condensation water generated by the secondary cooler 24 is mildly acid, which makes two-staged neutralization unnecessary.

The neutralizer 27A purifies the mildly-acid condensation water generated by the secondary cooler 24 by passing the condensation water through an alkaline substance such as seashells, thereby turning the condensation water to harmless exhaust water. This exhaust water can be discharged directly into sewers.

As thus described, the waste processing system 1B of the present embodiment can not only be enhanced in self-sufficiency of waste processing, but also generate charcoal by employing the carbonization furnace 2B as a pyrolysis apparatus, and thus, is beneficial if there is a large quantity of naturally-derived organic wastes and favorable particularly for use in, for example, a farmhouse or the like.

### [Embodiment 4]

Next, a waste processing system 1C of Embodiment 4 of the present invention is described. Differences from the waste processing system 1B of Embodiment 3 will only be described in the present embodiment.

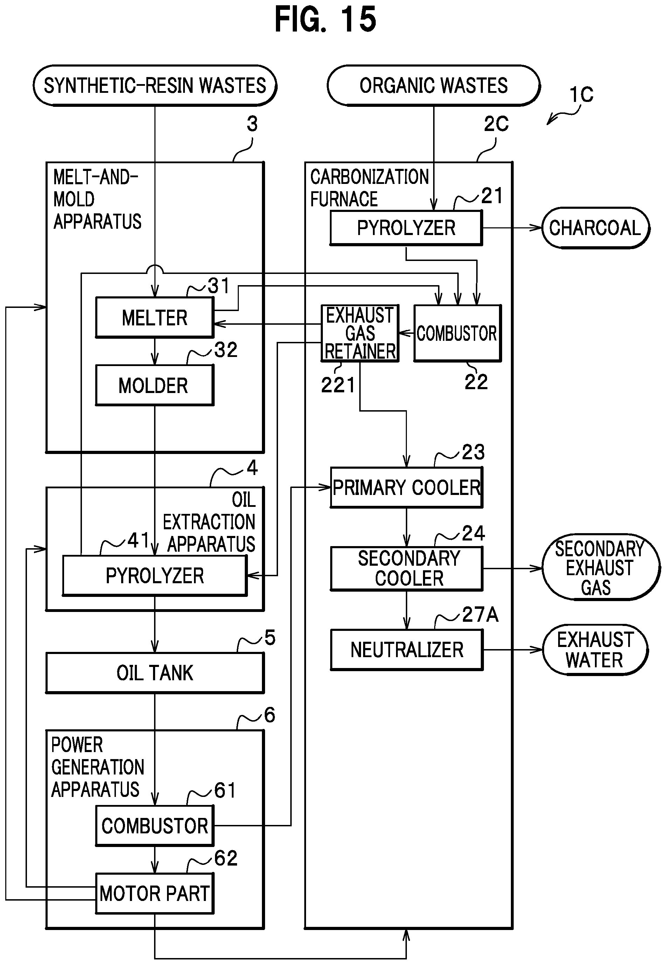

FIG. 15 is a system diagram showing the overall configuration of the waste processing system 1C. The waste processing system 1C differs from Embodiment 3 in including, as a pyrolysis apparatus, a carbonization furnace 2C in place of the carbonization furnace 2B. Like the low-temperature pyrolysis furnace 2A of Embodiment 2, the carbonization furnace 2C refluxes the primary exhaust gas retained in the exhaust gas retainer 221 in the exhaust gas reflux channel 222 and thereby indirectly transfers heat of the combustor 22 to the melt-and-mold apparatus 3 and the oil extraction apparatus 4.

Although the embodiments according to the present invention have thus been described, the present invention is not limited to the embodiments described above, and each constituent can be added or altered without departing from the gist of the present invention. For instance, other device that operates using power generated by the power generation apparatus 6 may be added, or the pyrolysis apparatus 2 may transfer heat using a method different from those in the embodiments described above.

### Reference Signs List

- 1, 1A, 1B, 1C: waste processing system
- 2, 2A: low-temperature pyrolysis furnace (pyrolysis apparatus)
- 2B, 2C: carbonization furnace (pyrolysis apparatus)
- 3: melt-and-mold apparatus
- 31: melter
- 4: oil extraction apparatus
- 41: pyrolyzer
- 5: oil tank
- 6: power generation apparatus
- 100: container

## Claims

1. A waste processing system comprising:
a pyrolysis apparatus that pyrolyzes a combustible waste;
a melt-and-mold apparatus that generates an ingot of resin and combustible gas from a synthetic-resin waste; and
an oil extraction apparatus that generates combustible oil and combustible gas from the ingot of resin, wherein
the melt-and-mold apparatus has a melter that melts the synthetic-resin waste using heat produced by the pyrolysis apparatus,
the oil extraction apparatus has a pyrolyzer that pyrolyzes the ingot of resin using the heat produced by the pyrolysis apparatus, and
at least one of the combustible gas generated at the melt-and-mold apparatus and the combustible gas generated at the oil extraction apparatus is supplied to the pyrolysis apparatus.

2. The waste processing system according to claim 1, further comprising:
an oil tank that retains the combustible oil; and
a power generation apparatus that is actuated by the combustible oil supplied from the oil tank, wherein
power generated by the power generation apparatus is supplied to at least one of the pyrolysis apparatus, the melt-and-mold apparatus, and the oil extraction apparatus.

3. The waste processing system according to claim 2, further comprising a container that houses the pyrolysis apparatus, the melt-and-mold apparatus, the oil extraction apparatus, the oil tank, and the power generation apparatus.

4. The waste processing system according to claim 3, wherein
the container is a portable container.
